# EUROPEAN PATENT APPLICATION

(11) **EP 3 273 621 A1**
(43) Date of publication of application: **24.01.2018**
(21) Application number: 16767656.8
(22) Date of filing: 01.03.2016
(51) Int. Cl.: H04B 10/116, H02J 7/35

(54) **WEARABLE DEVICE**

(30) Priority: 20.03.2015 CN 201510125246
(71) Applicant: ZTE Corporation, Shenzhen, Guangdong 518057 (CN)
(72) Inventor: XU, Jidong, Shenzhen Guangdong 518057 (CN); LU, Jianxin, Shenzhen Guangdong 518057 (CN); WANG, Ying, Shenzhen Guangdong 518057 (CN); MA, Zhuang, Shenzhen Guangdong 518057 (CN)
(74) Representative: Winter, Brandl, Fürniss, Hübner, Röss, Kaiser, Polte - Partnerschaft mbB
(86) International application number: PCT/CN2016/075239
(87) International publication number: WO 2016/150279

(57) **Abstract**

The present invention provides a wearable device. The wearable device includes: an optoelectronic identification, OEID, built in the wearable device. The OEID includes a photovoltaic cell module and an optical communication module. The photovoltaic cell module is configured to convert a light energy of a received light to an electric energy for power the wearable device. The optical communication module is configured to receive and transmit data for optical communication interaction with an external device, and to store the received data. The present invention solve a problem in the related art of inconvenient user operation caused by the need for a wired or wireless changer to charge the wearable device, thereby improving a user's operating experience of the wearable device.

## Description

### TECHNICAL FIELD

The present invention relates to the field of communications and, more particularly, to a wearable device.

### BACKGROUND

Wearable devices are a new category in the field of consumer electronics, and include smart glasses, smart watches, and smart health bracelet. One of its main applications is to record healthy or athletic data, and of course it may also provide other simple features such as clocks or provide some simple shooting features.

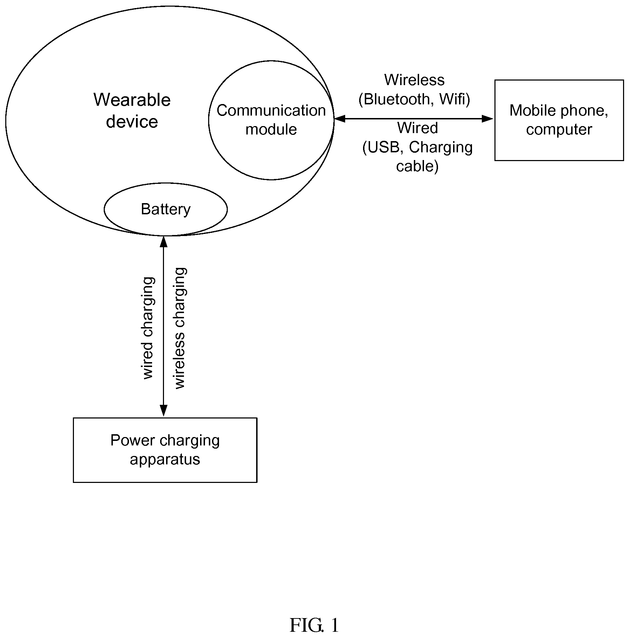

In addition to the need of modules for collecting data of health and movement, the wearable device must have two functional modules, one is a communication module, and the other is the battery module. Figure 1 is a structure diagram of a wearable device in the related arts. As shown in Figure 1, the communication module employs wireless communication manners such as Bluetooth and WiFi, or employs a wired communication manner to transmit its data to corresponding electronic devices, or to set parameters from an electronic device. A main function of the battery module is to charge the wearable device, and its main form is a battery which can be charged in a wired or wireless manner. Such work manners make the wearable device inconvenience to use. That is, it is always needed to carry a charger. In addition, radio frequency transmission, which is the largest power consumption of the wear equipment, will also cause leakage and radiation on the human body.

With respect to the problem in the related art of inconvenient user operation caused by the need for a wired or wireless charger to charge the wearable device, an effective solution has not provided yet.

### SUMMARY

A main object of embodiments of the present invention is to provide a wearable device so as to solve at least the problem in the related art of inconvenient user operation caused by the need for a wired or wireless charger to charge the wearable device.

According to a first aspect of the embodiments of the present invention, a wearable device is provided. The wearable device includes an Optoelectronic Identification (OEID for short) built in the wearable device. The OEID includes a photovoltaic cell module and an optical communication module. The photovoltaic cell module is configured to convert light energy of received light to electric energy for powering the wearable device. The optical communication module is configured to receive and transmit optical communication data for interacting with an external device, and to store the received data.

Optionally, the optical communication module includes a light-emitting module, a light-receiving module and an OEID chip. The light-emitting module is connected to the OEID chip and configured to transmit an uplink optical data signal to the external device through a visible light communication (VLC for short) manner. The light-receiving module is connected to the OEID chip and configured to receive through the visible light communication (VLC) manner a downlink optical data signal provided by the external device. The OEID chip is connected to the photovoltaic cell module and is configured to control the photovoltaic cell module to power the light-emitting module and the light-receiving module and to control the light-emitting module and the light-receiving module to interact the optical communication data with the external device.

Optionally, the photovoltaic cell module is a solar cell or a Photonic Voltage Detector (PVD for short).

Optionally, the solar cell is configured to convert the light energy of the received light to the electric energy and transmit the electric energy to the OEID chip; and the PVD is configured to convert the light energy of the received light to the electric energy and transmit the electric energy to the OEID chip, and to receive data sent by the external device, convert a light signal to an electrical signal and transmit the electrical signal to the OEID chip.

Optionally, in the case where the photovoltaic cell module is the solar cell, the light-emitting module is a first light emitter and the light-receiving module is a light receiver. The first light emitter is connected to the OEID chip and configured to receive data sent by the OEID chip and transmit the data to the external device. The first light emitter is a light emitting diode (LED). The light receiver is connected to the OEID and configured to receive data sent by the external device and forward the data to the OEID chip, where the light receiver is a PIN photodiode (PIN-PD).

Optionally, in the case where the photovoltaic cell module is the PVD, the PVD includes the light-receiving module, and the light-emitting module is a second light emitter. The second light emitter is configured to transmit data to the external device, where the second light emitter is a Light Emitting Diode (LED for short). The PVD is connected to the OEID chip and is configured to receive data sent by the external device and forward the data to the OEID chip.

Optionally, the OEID chip includes a signal-transmitting unit, a signal-receiving unit, a control management unit, a data storage unit and a power management unit. The data storage unit is connected to the control management unit and configured to store the optical communication data for interacting between the device and the external device. The power management unit is connected to the control management unit and configured to receive and store the electric energy transmitted by the photovoltaic cell module and power a charge unit in demand according to an instruction of the control management unit. The control management unit is configured to store the received data into the data storage unit and instruct the power management unit to power the unit in demand.

Optionally, the OEID chip further includes the signal-receiving unit which is connected to the light receiver and the PVD and configured to receive data sent by the external device via the light receiver or PVD; the signal-transmitting unit which is connected to the first light emitter or the second light emitter and configured to acquire data from the data storage unit and transmit data to the first light emitter or the second light emitter; and the control management unit which is further configured to control the signal-transmitting unit and the signal-receiving unit to interact optical communication data and store the data.

Optionally, the OEID chip further includes a battery unit connected to the power management unit, and the battery unit is configured to store the electric energy.

Optionally, in the OEID, the photovoltaic cell module and the optical communication module are integrated in a same chip by means of a Complementary Metal Oxide Semiconductor (CMOS) manner.

According to embodiments of the present invention, the OEID is built in the wearable device, and the OEID includes the photovoltaic cell module and the optical communication module. Light energy of the received light is converted to electric energy by the photovoltaic cell module. The electric energy is used to power the wearable device. The optical communication module is configured to receive and transmit optical communication data for interacting with an external device, and to store the received data. Through the present invention, the problem in the related art that the wired or wireless charger is always needed for charging the wearable device causing inconvenience of user operation is solved, thereby achieving an effect of improving a user's operating experience of the wearable device.

### BRIEF DESCRIPTION OF DRAWINGS

The accompanying drawings described herein for providing a further understanding of the invention constitute a part of this application. Illustrative embodiments of the invention and their description are intended to interpret the invention and do not constitute an undue limitation to the present invention. In the drawings:
FIG. 1 is a structural block diagram of a wearable device in related arts;
FIG. 2 is a structural block diagram of a wearable device according to an embodiment of the present invention;
FIG. 3 is a first alternative structural block diagram of a wearable device according to an embodiment of the present invention;
FIG. 4 is a second alternative structural block diagram of a wearable device according to an embodiment of the present invention;
FIG. 5 is a third alternative structural block diagram of a wearable device according to an embodiment of the present invention;
FIG. 6 is a fourth alternative structural block diagram of a wearable device according to an embodiment of the present invention;
FIG. 7 is a structural block diagram of a wearable device and a read-write device connected each other according to an alternative embodiment of the present invention;
FIG. 8 is a first structural block diagram of an OEID of a wearable device according to an alternative embodiment of the present invention;
FIG. 9 is a first structural block diagram of an OEID chip of a wearable device according to an alternative embodiment of the present invention;
FIG. 10 is a second structural block diagram of an OEID of a wearable device according to an alternative embodiment of the present invention;
FIG. 11 is a second structural block diagram of an OEID chip of a wearable device according to an alternative embodiment of the present invention;
FIG. 12 is a third structural block diagram of an OEID chip of a wearable device according to an alternative embodiment of the present invention; and
FIG. 13 is a fourth structural block diagram of an OEID of a wearable device according to an alternative embodiment of the present invention.

### DETAILED DESCRIPTION

It is to be noted that embodiments in the present application and features in the embodiments may be combined with each other without conflict. Hereinafter, the present invention will be described in detail with reference to the accompanying drawings.

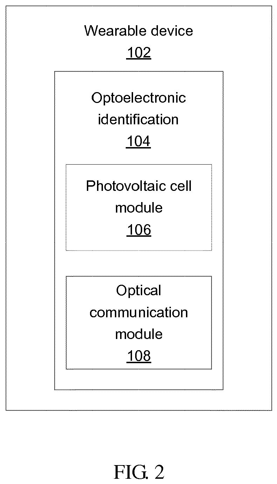

The present embodiment provides a wearable device. FIG. 2 is a structural block diagram of a wearable device according to an embodiment of the present invention. As shown in FIG. 2, the wearable device 102 includes an optoelectronic identification (OEID) 104 built in the wearable device. The OEID 104 includes a photovoltaic cell module 106 and an optical communication module 108.

The photovoltaic cell module 106 is configured to convert a light energy of a received light to an electric energy for powering the wearable device.

The optical communication module 108 is configured to receive and transmit data for optical communication interaction with an external device, and to store a received data.

According to the present embodiment, the OEID 104 is built in the wearable device, and the OEID 104 provided in the OEID includes the photovoltaic cell module 106 and the optical communication module 108. Light energy of the received light is converted to electric energy by the photovoltaic cell module 106. The electric energy is used for charging the wearable device. The optical communication module 108 is configured to receive and transmit data for optical communication interaction with an external device, and to store the received data. Through the light charging manner of the present embodiment, the problem in the related art of inconvenient user operation caused by the need for a wired or wireless charger to charge the wearable device is solved, thereby achieving an effect of improving a user's operating experience of the wearable device.

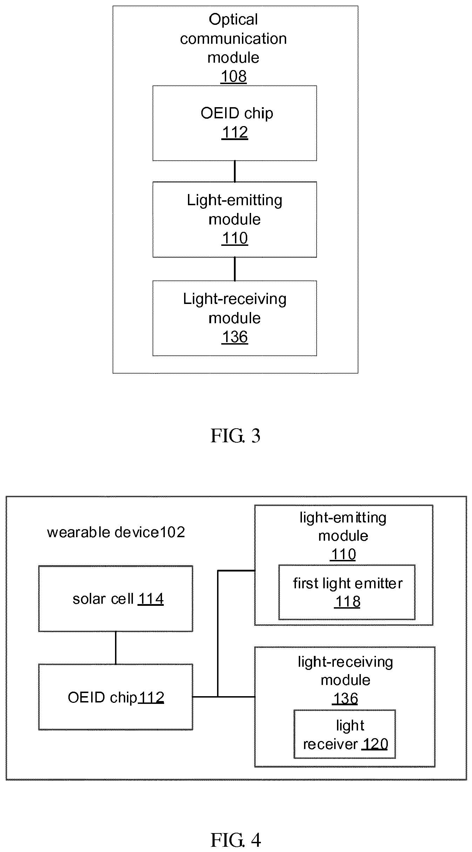

FIG. 3 is a first alternative structural block diagram of a wearable device according to an embodiment of the present invention. As shown in FIG. 3, the optical communication module 108 includes: a light-emitting module 110, a light-receiving module 136 and an OEID chip 112. The light-emitting module 110 is connected to the OEID chip 112 and is configured to transmit an uplink optical data signal to an external device through a visible light communication (VLC) manner. The light-receiving module 136 is connected to the OEID chip 112 and is configured to receive through the visible light communication (VLC) manner a downlink optical data signal provided by the external device. The OEID chip 112 is connected to the photovoltaic cell module 106 and is configured to control the photovoltaic cell module to power the light-emitting module 110 and the light-receiving module 136 and to control the light-emitting module 110 and the light-receiving module 136 to interact the optical communication data with the external device.

Optionally, the photovoltaic cell module 106 related in the present embodiment may be a solar cell 114 or a photonic voltage detector PVD 116. The solar cell 114 is configured to convert the light energy of the received light to the electric energy and transmit the electric energy to the OEID chip 112. PVD 116 is configured to convert the light energy of the received light to the electric energy and transmit the electric energy to the OEID chip 112, and to receive data sent by the external device, convert a light signal to an electrical signal and transmit the electrical signal to the OEID chip 112.

FIG. 4 is a second alternative structural block diagram of a wearable device according to an embodiment of the present invention. As shown in FIG. 4, in the case where the photovoltaic cell module 106 is a solar cell 114. The device may further include: a first light emitter 118 which is connected to the OEID chip and configured to receive data sent by the OEID chip and transmit data to the external device, and a light receiver 120 which is connected to the OEID and configured to receive data sent by the external device and forward data to the OEID chip 112.

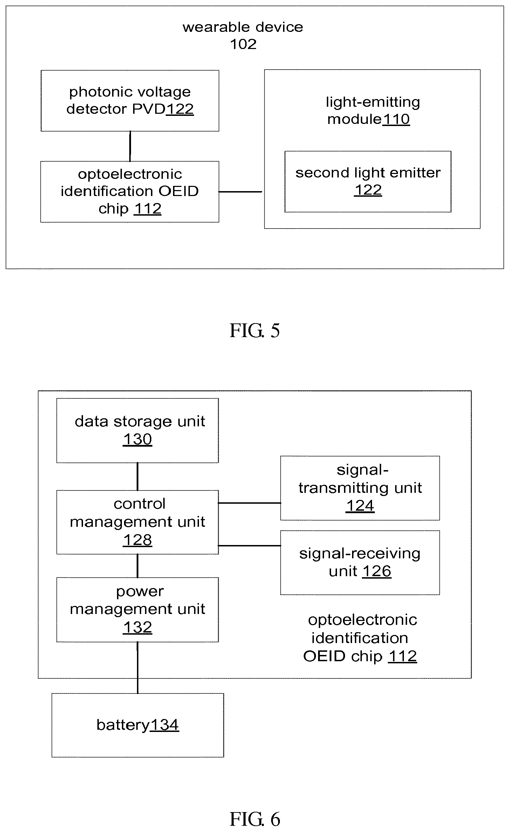

FIG. 5 is a third alternative structural block diagram of a wearable device according to an embodiment of the present invention. As shown in FIG. 5, in the case where the photovoltaic cell module is PVD 122, the PVD 122 includes the light-receiving module 136. The light-emitting module 110 may be a second light emitter 122 connected to the OEID chip 112. The second light emitter 122 is configured to transmit data to the external device.

Optionally, the first light emitter 118 and the second light emitter 122 related in the present embodiment are light emitting diodes (LEDs) and the light receiver 120 is a PIN photodiode (PIN-PD).

FIG. 6 is a fourth alternative structural block diagram of a wearable device according to an embodiment of the present invention. As shown in FIG. 6, the OEID chip 112 includes a signal-transmitting unit 124, a signal-receiving unit 126, a control management unit 128, a data storage unit 130 and a power management unit 132. The data storage unit 130 is connected to the control management unit 128 and configured to store optical communication data for interacting between the device and the external device. The power management unit 132 is connected to the control management unit 128 and is configured to receive and store the electric energy transmitted by the photovoltaic cell module, and power a unit in demand according to an instruction of the control management unit 128. The control management unit 128 is configured to store the received data into the data storage unit 130 and instruct the power management unit 132 to power the unit in demand.

The signal-receiving unit 126 is connected to the light receiver or PVD and configured to receive data sent by the external device via the light receiver or PVD. The signal-transmitting unit 124 is connected to the first light emitter 118 or the second light emitter 122, and is configured to acquire data from the data storage unit 130 and transmit data to the first light emitter 118 or the second light emitter 122. The control management unit 128 is further configured to control the signal-transmitting unit 124 and the signal-receiving unit 126 to interact optical communication data and store the data.

The OEID chip 112 further includes a battery 134 connected to the power management unit 132. The battery 134 is configured to store electric energy.

Hereinafter, the present invention will be illustrated with reference to alternative embodiments of the invention.

The alternative embodiment provides a wearable device. The wearable device integrates the optoelectronic identification (OEID) in the wearable device. Since the OEID itself has optical wireless communication, optical wireless charge and data storage functions, it can replace the radio frequency communication module, the battery, charge and data storage functions of the wearable device in the related arts, such that the wearable device of the present alternative embodiment is more compact, more convenient to carry, no charger is required, and it is not necessary to find a place where power is supplied. As long as the place where the light (natural light or lamp light) exists, the wearable device of the present alternative embodiment can be charged anytime and anywhere, and thus the wearable device in the present alternative embodiment is more convenient to use.

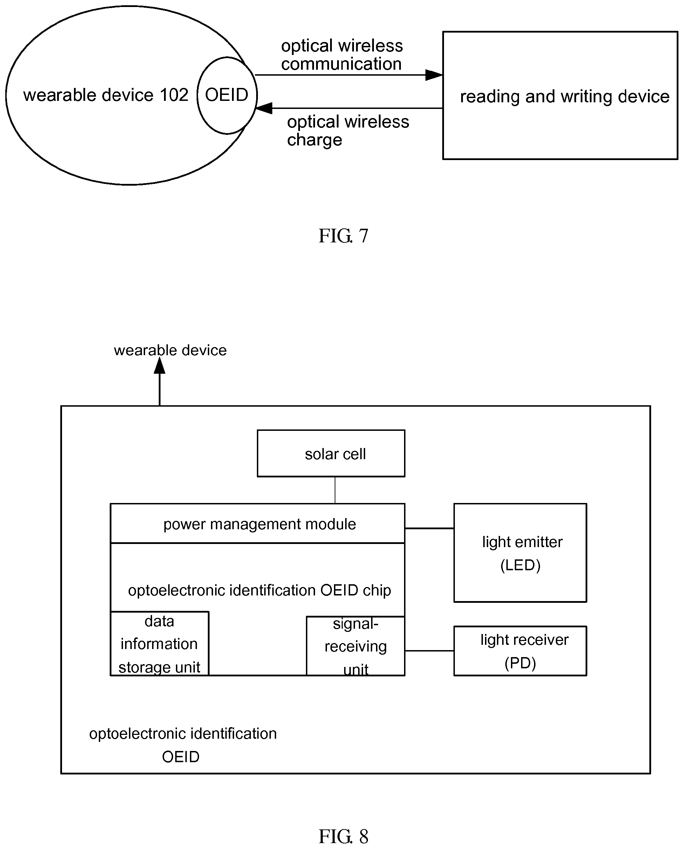

In the present alterative embodiment, the OEID is integrated in the wearable device and the OEID and an external reading and writing device constitute a system. FIG. 7 is a structural block diagram showing a wearable device and a read-write device connected each other according to an alternative embodiment of the present invention. As shown in FIG. 7, the reading and writing device may conduct optical wireless charge to the OEID identifier of the wearable device and may conduct optical wireless communicate with the OEID identifier. That is, the reading and writing device may set parameters of the OEID identifier and receive its uplink data. Meanwhile, the wearable device of the present alterative embodiment may also charge itself though external natural light or lamp light. Such charging process may be continually carried out, and as long as the light exists, such charging process may be continually carried out at anywhere and anytime without human operation until the wearable device is fully charged. In addition, as long as a power consumption rate of the wearable device when operating is less than power supplying rate, the wearable device can continually work. Generally, the wearable device starts an operation mode only when the wearable device is needed by a user, and the power consumption is small when the wearable device is in operation. Generally, its power consumption is relatively large merely in a communication state, but the reading and writing device can charge it continually.

FIG. 8 is a first structural block diagram of an OEID of a wearable device according to an alternative embodiment of the present invention. As shown in FIG. 8, the OEID of the wearable device includes a solar cell, a light emitter, a light receiver and an OEID chip.

The OEID chip itself has a power management function and a signal control and process function, supplies power to the entire wearable device, collects data of the wearable device and transmits the data to the external reading and writing device. The solar cell converts the received light into electricity and transmits the electricity to a power management module in the OEID chip. The power management module stores the electric energy in a built-in capacitor and supplies power for the light emitter, light receiver and the OEID chip. The light emitter optionally employs a light emitting diode (LED) and is configured to transmit the uplink signal to send data of the wearable device to the external reading and writing device. The light receiver optionally employs a PIN photodiode (PIN-PD). Alternatively, the PIN-PD and the solar cell are integrated to form the PVD for collecting a downlink signal sent by the external reading and writing device, converting it to an electrical signal and transmitting the electrical signal to the OEID chip for process.

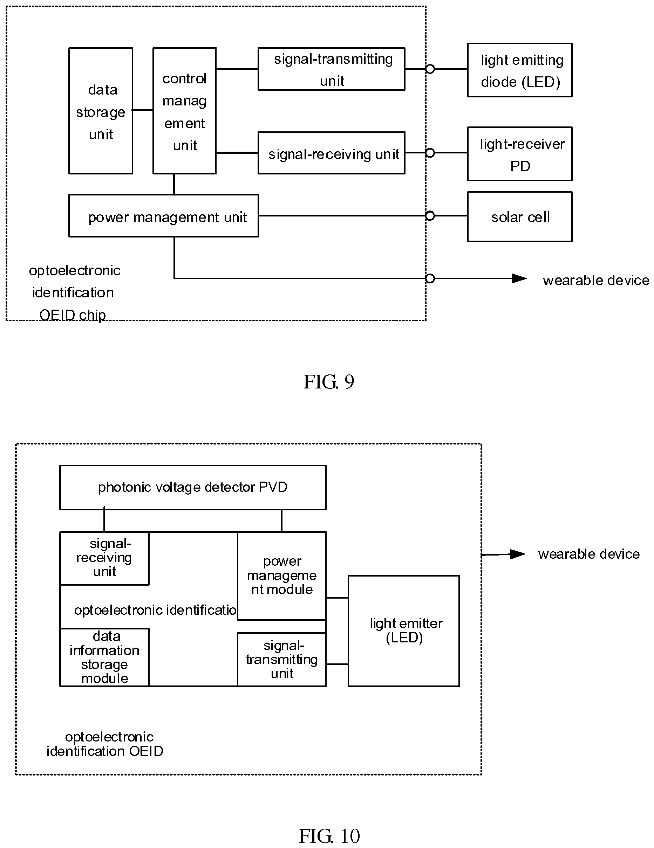

FIG. 9 is a first structural block diagram of an OEID chip of a wearable device according to an alternative embodiment of the present invention. As shown in FIG. 9, in the OEID chip, its internal functions units are integrated together by a Complementary Metal Oxide Semiconductor (CMOS) technology. The functions include a signal-transmitting unit, a signal-receiving unit, a control management unit, a power management unit and a data storage unit. The signal-transmitting unit is configured to extract data from the data storage unit according to a demand of the control management unit and control the light emitter LED to transmit the uplink data. The signal-receiving unit is configured to control the light receiver to and transmit the electrical signal sent by the light receiver to the control management unit for process. The control management unit is configured to control and process data, that is, to process the uplink data and downlink data. The power management unit is configured to store the electricity converted by the solar cell and supply the required power to various units and modules. Amain function of the data storage unit is to store the data sent by the wearable device and to supply data to the signal-receiving unit for transmitting the uplink signal by the signal-receiving unit. The data storage unit may also store corresponding ID information provided by the external reading and writing device. The power management module includes a capacitor for storing electric energy, and the control management unit manages the signal-transmitting unit, the signal-receiving unit and the data information storage unit.

Since the built-in OEID itself is passive, it is charged by an external light source, and then stores the electric energy into the power management unit. The power management unit may supply power to the built-in OEID when the wearable device enters into the normal operation state. The data and setting of the wearable device are communicated and interacted with an external reading and writing device by an optical wireless communication manner, typically, by the visible light communication (VLC) manner. That is, the reading and writing device transmits a downlink light to the built-in OEID identifier, the wearable device transmits its data to the reading and writing device via the built-in LED after receiving an instruction. This process is a half-duplex time division mode. The reading and writing device may transmit a continuous downlink light to the built-in OEID identifier for charging, on the condition that the reading and writing device is waiting for the uplink light data, such that it is ensured that the wearable device has enough electrical energy for ensuring that it completes the communication task.

FIG. 10 is a second structural block diagram of an OEID of a wearable device according to an alternative embodiment of the present invention. As shown in FIG. 10, the OEID identifier includes a photonic voltage detector PVD, a light emitter and an OEID chip.

The PVD is a device by integrating the solar cell and the light receiver and configured to convert the external light to electricity, transmit the electricity to the power management module in the OELD chip for storage. At the same time, the PVD also can receive an external pulse light signal and convert it to an electrical signal and transmit the electrical signal to the OEID chip. Optionally, the light emitter is a LED and configured to transmit the uplink signal so as to transmit the data of the wearable device to the external reading and writing device. The OEID chip itself has the power management function and the signal control and process function, supplies power to the entire wearable device and collect data of the wearable device and transmits the data to the external reading and writing device.

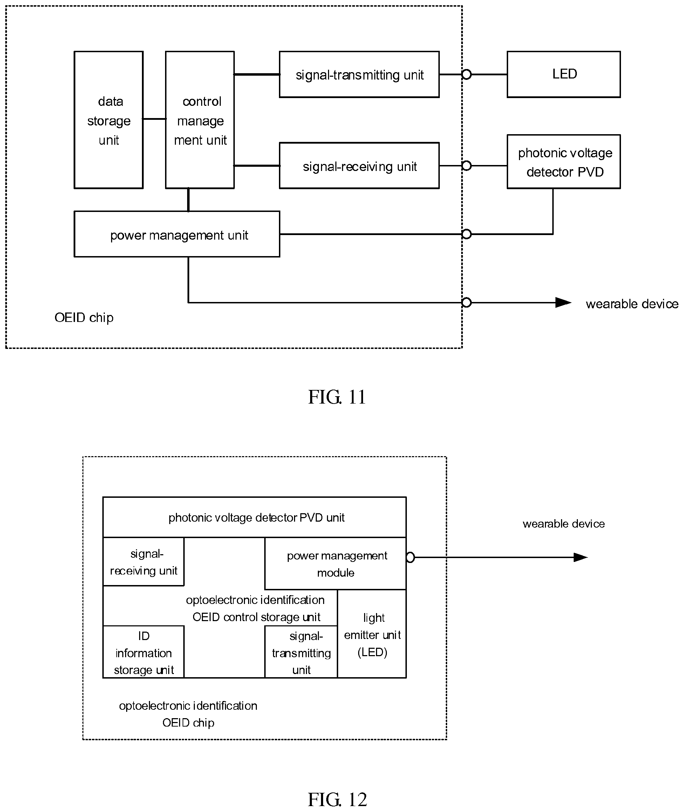

FIG. 11 is a second structural block diagram of an OEID chip of a wearable device according to an alternative embodiment of the present invention. As shown in FIG. 11, five units in the OEID are integrated together by means of a CMOS technology, and the five units are the signal-transmitting unit, the signal-receiving unit, the control management unit, the power management unit and the data storage unit.

The signal-transmitting unit is configured to extract data from the data storage unit according to a demand of the control management unit and control the light emitter LED to transmit the uplink data. The signal-receiving unit receives the electrical signal sent by the PVD and transmits the electrical signal to the control management unit for process. The power management unit is configured to store the electricity converted by the PVD and supply the required power for various units and modules. The control management unit is a center for control and data process, and is configured to process the uplink data and downlink data. Since the PVD a device combining the solar cell and the light receiver, it is connected to the power management unit and a signal control unit. The control management unit needs to conduct a discriminating process to the signal from the PVD. For example, a continuous electrical signal will be processed by the power management unit, a pulse electrical signal will be processed by the signal-receiving unit. A main function of the data storage unit is to store the data sent by the wearable unit and to provide data to the signal-receiving unit for transmitting a uplink signal. The data storage unit may also store the corresponding ID information provided by the external reading and writing device.

FIG. 12 is a third structural block diagram of an OEID chip of a wearable device according to an alternative embodiment of the present invention. As shown in FIG. 12, all working units of all OEID identifiers are integrated together by means of the CMOS technology to form one single integrated OEID identifier chip. The OEID chip includes the photonic voltage detector PVD, the light emitter LED and an OEID control storage unit.

The PVD is a device by integrating the solar cell and the light receiver and configured to convert the external light to electricity, transmit the electricity to the power management module in the OELD chip for storage. At the same time, the PVD may also receive an external pulse light signal and convert it to an electrical signal and transmit the electrical signal to the OEID chip. Optionally, the light emitter is a LED and configured to transmit the uplink signal so as to transmit the data of the wearable device to the external reading and writing device. The OEID chip itself has the power management function and the signal control and process function, supplies power to the entire wearable device and collect data of the wearable device and transmits the data to the external reading and writing device.

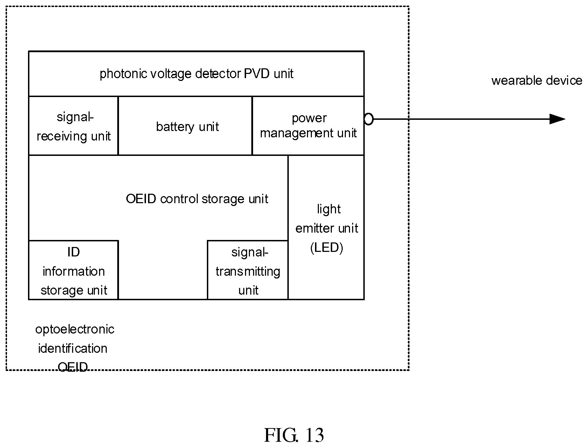

FIG. 13 is a fourth structural block diagram of an OEID of a wearable device according to an alternative embodiment of the present invention. As shown in FIG. 13, in addition to the units in the above embodiments, the OEID may further include a battery unit.

Since a power stored by the capacitor in the power management module of the OEID is limited, the original capacitor is replaced with the added battery unit, making the OEID store more power and also providing more power to a high power consumption wearable device such as the wearable device with camera function. The battery unit is an independent device unit and is directly connected to the solar cell. If the OEID is single-chip integrated by the CMOS technology, as shown in FIG. 11, its solar cell part is connected to the power management part. The power management unit provides corresponding power sources for other parts, such as a wearable unit. If the OEID is composed of discrete devices, the battery unit is disposed between the solar cell and the the OEID chip, and it also provides suitable power source for other parts such as the wearable unit and light emitter, by the power management module in the OEID chip.

For the wearable device with built in OEID in the present alternative embodiment, it has two functions: the external communication function and the battery function. The external reading and writing device may server as a reading and writing device for the OEID as long as the reading and writing device has the VLC function, such as mobile phone, a computer, a LED light and other electronic device and the like. Optionally, the reading and writing device may be a LED, a PIN-PD or a CCD light receiver and a chip capable of running VLC. The reading and writing device completes the VLC function by means of an APP software. The wearable device with built-in OEID communicates with the external device in the VLC manner. A characteristic of the communication is that the half-duplex time division mode is employed and the uplink and downlink are transmitted in a time division mode. The external device sends a downlink instruction to the wearable device and sets parameters, while the wearable device transmits the uplink data to the external device. The communication transmission between them is carried out by a Point to Point (P2P for short) manner. Through the above VLC function, problems and shortcomings in the related art that the previous radio frequency communication module in the wearable device is harmful to human body, information is easy to leak, and data transmission rate is low can be effectively solved.

The wearable device is powered by the built in OEID identifier. Since the OEID has the solar cell, the wearable device may be wirelessly charged by the natural light and lamp light of the environment. The external light source can be found everywhere, so the wearable device can be charged as long as there is light, and no charger is needed. As such the wearable device is convenient to carry. Especially in harsh environments such as wilderness, such wearable device with built-in OEID identifier can also work well. For wearable devices that require more power, such as a wearable device with camera function, the built-in OEID with a battery function may be selected. The built-in OEID is charged by the environment light such that it can store more power to ensure the normal operation of the wearable device.

The foregoing is merely optional embodiments of the present invention, and is not used to limit the present invention. For those skilled in the art, the present invention may have various modifications and variations. Any modifications, equivalent substitutions, improvements, etc., which are within the spirit and principles of the invention, should be included within the scope of the present invention.

### Industrial Applicability

According to embodiments of the present invention, the OEID is built in the wearable device, and the OEID includes the photovoltaic cell module and the optical communication module. Light energy of the received light is converted to electric energy by the photovoltaic cell module. The electric energy is used to supply power to the wearable device. The optical communication module is configured to receive and transmit optical communication data for interacting with an external device, and to store a received data. Through the present invention, the problem in the related art of inconvenient user operation caused by the need for a wired or wireless charger to charge the wearable device is solved, thereby achieving an effect of improving a user's operating experience of the wearable device.

## Claims

1. A wearable device, comprising: an optoelectronic identification, OEID, built in the wearable device, wherein the OEID comprises a photovoltaic cell module and an optical communication module,
the photovoltaic cell module is configured to convert light energy of received light to electric energy for powering the wearable device; and
the optical communication module is configured to receive and transmit optical communication data for interacting with an external device, and to store the received data.

2. The wearable device of claim 1, wherein the optical communication module comprises: a light-emitting module, a light-receiving module and an OEID chip,
the light-emitting module is connected to the OEID chip and configured to transmit an uplink optical data signal to the external device through a visible light communication, VLC, manner;
the light-receiving module is connected to the OEID chip and configured to receive, through the visible light communication, VLC, manner, a downlink optical data signal provided by the external device;
the OEID chip is connected to the photovoltaic cell module and is configured to control the photovoltaic cell module to power the light-emitting module and the light-receiving module, and to control the light-emitting module and the light-receiving module to interact the optical communication data with the external device.

3. The wearable device of claim 2, wherein the photovoltaic cell module is a solar cell or a photonic voltage detector, PVD.

4. The wearable device of claim 3, wherein
the solar cell is configured to convert the light energy of the received light to the electric energy and transmit the electric energy to the OEID chip;
the PVD is configured to convert the light energy of the received light to the electric energy and transmit the electric energy to the OEID chip, and to receive data sent by the external device, convert a light signal to an electrical signal and transmit the electrical signal to the OEID chip.

5. The wearable device of claim 4, wherein in the case where the photovoltaic cell module is the solar cell, the light-emitting module is a first light emitter and the light-receiving module is a light receiver;
the first light emitter is connected to the OEID chip and configured to receive data sent by the OEID chip and transmit the data to the external device, wherein the first light emitter is a light emitting diode, LED;
the light receiver is connected to the OEID and configured to receive data sent by the external device and forward the data to the OEID chip, wherein the light receiver is a PIN photodiode, PIN-PD.

6. The wearable device of claim 4, wherein in the case where the photovoltaic cell module is the PVD, the PVD comprises the light-receiving module, the light-emitting module is a second light emitter;
the second light emitter is configured to transmit data to the external device, wherein the second light emitter is a light emitting diode, LED;
the PVD is connected to the OEID chip and is configured to receive data sent by the external device and forward the data to the OEID chip.

7. The wearable device of claim 5 or claim 6, wherein the OEID chip comprises a signal-transmitting unit, a signal-receiving unit, a control management unit, a data storage unit and a power management unit;
the data storage unit is connected to the control management unit and configured to store optical communication data for interacting between the device and the external device;
the power management unit is connected to the control management unit and configured to receive and store the electric energy transmitted by the photovoltaic cell module and power a unit in demand according to an instruction of the control management unit;
the control management unit is configured to store the received data into the data storage unit and instruct the power management unit to power the unit in demand.

8. The wearable device of claim 7, wherein the OEID chip further comprises:
the signal-receiving unit, which is connected to the light receiver and the PVD and configured to receive data sent by the external device via the light receiver or the PVD;
the signal-transmitting unit, which is connected to the first light emitter or the second light emitter and configured to acquire data from the data storage unit and transmit data to the first light emitter or the second light emitter; and
the control management unit, which is further configured to control the signal-transmitting unit and the signal-receiving unit to interact optical communication data and store the data.

9. The wearable device of claim 8, wherein the OEID chip further comprises a battery unit connected to the power management unit, and the battery unit is configured to store the electric energy.

10. The wearable device of claim 1, wherein in the OEID, the photovoltaic cell module and the optical communication module are integrated in a same chip by means of a Complementary Metal Oxide Semiconductor, CMOS, manner.
